# EUROPÄISCHE PATENTSCHRIFT

(11) **EP 2 712 777 B1**
(45) Veröffentlichungstag und Bekanntmachung des Hinweises auf die Patenterteilung: **24.04.2019**
(21) Anmeldenummer: 13173420.4
(22) Anmeldetag: 24.06.2013
(51) Int. Cl.: B60S 9/18, B60D 1/66

(54) **An einer Anhängerdeichsel befestigbare Stützeinrichtung**
Support device that can be attached to a trailer tow bar
Dispositif d'appui pouvant être fixé à un timon d'attelage

(30) Priorität: 27.09.2012 DE 202012103709 U
(43) Veröffentlichungstag der Anmeldung: 02.04.2014
(73) Patentinhaber: Winterhoff GmbH, 58339 Breckerfeld (DE)
(72) Erfinder: Winterhoff, Ulrich, 58339 Breckerfeld (DE)
(74) Vertreter: Kleine, Hubertus

(56) Entgegenhaltungen:
- CN-Y- 201 105 721
- DE-U1- 20 200 456
- GB-A- 2 457 426

## Beschreibung

Die vorliegende Erfindung betrifft eine an einer Anhängerdeichsel befestigbare Stützeinrichtung gemäß dem Oberbegriff des Anspruchs 1.

Solche Stützeinrichtungen dienen dazu, einen Anhänger, vorzugsweise einen PKW-Anhänger, in nicht an ein Fahrzeug angekuppelter Stellung deichselseitig abzustützen. Die mit einem Stützrad versehene Stützeinrichtung übernimmt dabei nicht nur eine Stützfunktion, sondern gleichermaßen eine Rangierfunktion. Demzufolge ist das Stützrad gegenüber einem an der Anhängerdeichsel befestigbaren Außenrohr drehbar und höhenverstellbar gelagert.

Zur Sicherung des Stützrades in der Nichtfunktionsstellung, d.h. in einer nicht den Anhänger stützenden Stellung, bei der ein Innenrohr der Stützeinrichtung, an dem das Stützrad befestigt ist, vollständig oder nahezu vollständig in das Außenrohr eingefahren ist, muss vor dem Erreichen der Nichtfunktionsstellung beim Hochkurbeln des Innenrohrers das Stützrad stets manuell in eine vorbestimmte Position verschwenkt werden, so dass ein Benutzer beim Hochkurbeln des Stützrades nur von vorbestimmten Positionen vor der Stützeinrichtung in der Lage ist, gleichzeitig das Stützrad auszurichten und dieses dabei in seiner hochgekurbelten Endposition zu kurbeln.

Aus der GB 2 457 426 A ist eine Stützeinrichtung mit einem ersten Einlaufelement vorgesehen, mit dem ein zweites Einlaufelement derart in Werkverbindung bringbar ist, dass das Stützrad beim Einfahren des Innenrohres in das Außenrohr vor Erreichen der eingefahrenen Endposition des Innenrohres in eine vorbestimme Winkelposition schwenkbar ist.

Dadurch ist ermöglicht, dass beim Einfahren des Innenrohrs, welches neben dem Stützrad befestigt ist, das Stützrad durch Zusammenwirken der an relativ zueinander bewegbaren Bauteilen der Stützeinrichtung angeordneten Einlaufelementen in die vorbestimmte Winkelposition geführt wird, ohne das ein Benutzer das Stützrad manuell in diese Position bringen muss.

Der Erfindung liegt daher die Aufgabe zugrunde, eine Stützeinrichtung der gattungsgemäßen Art soweit weiter zu entwickeln, dass das Hochkurbeln des Stützrades in seiner Nichtbenutzungs-Endstellung weiter vereinfacht wird.

Diese Aufgabe wird durch eine Stützeinrichtung mit den Merkmalen des Anspruchs 1 gelöst.

Erfindungsgemäß ist das erste Einlaufelement als Einlaufring oder Einlaufteilring mit einer in dessen Außenumfang eingelassenen, sich zum Innenumfang hin verjüngenden Nut ausgebildet.

Ein solches Einlaufelement ist einfach herzustellen und leicht an der Stützeinrichtung anzubringen, auch nachträglich, so dass auch bereits gefertigte Stützeinrichtungen mit einem solchen Einlaufelement zur vereinfachten Positionierung des Stützrades in einfacher Weise nachrüstbar ist.

Vorteilhafte Ausführungsvarianten sind Gegenstand der Unteransprüche.

Das zweite Innenlaufelement ist vorzugsweise als Einlaufnase ausgebildet. Auch dieses Einlaufelement ist einfach herzustellen und leicht an der Stützeinrichtung anzubringen, auch nachträglich, so dass auch bereits gefertigte Stützeinrichtungen mit solchen Einlaufelementen zur vereinfachten Positionierung des Stützrades in einfacher Weise nachrüstbar sind.

Das erste Einlaufelement ist nach einer bevorzugten Ausführungsvariante an der Mantelfläche des Außenrohres und das zweite Einlaufelement an einer der höhenverstellbaren Bauteile der Stützeinrichtung befestigt. Insbesondere in der Ausbildung des ersten Einlaufelements als Einlaufring ist dieses schnell und einfach auf der Mantelfläche des Außenrohrer befestigbar.

Um das Gleiten des zweiten Einlaufelements in die Öffnung des ersten Einlaufelements hinein zu erleichtern, ist gemäß einer weiteren bevorzugten Ausführungsvariante ein die Nut aufweisender Teilbereich des ersten Einlaufelements zur Handkurbel hin abgewinkelt ausgebildet.

Das als Nase ausgebildete zweite Einlaufelement, dass sich gemäß einer weiteren bevorzugte Ausführungsvariante parallel zum Außenrohr erstreckt ist dabei auf seiner dem ersten Einlaufelement zugewandten Seite nach oben hin, d.h. zur Handkurbel hin, verjüngt ausgebildet.

Nachfolgend wird ein Ausführungsbeispiel der Erfindung anhand der beigefügten Zeichnungen näher beschrieben.

Es zeigen:
- Figuren 1 und 2: unterschiedliche perspektivische Ansichten einer Ausführungsvariante einer erfindungsgemäßen Stützeinrichtung mit vollständig eingefahrenem Stützrad;
- Figur 3: eine Seitenansicht der Stützeinrichtung aus den Figuren 1 und 2 mit Darstellung der ineinander greifenden Einlaufelemente;
- Figur 4: eine perspektivische Ansicht des an dem Außenrohr angebrachten ersten Einlaufelements mit Darstellung der in dessen Außenumfang eingelassenen, sich zum Innenumfang hin verjüngenden Nut;
- Figur 5: eine Seitenansicht der Stützeinrichtung aus den Figuren 1 und 2 in nur teilweise eingefahrenem Zustand des Stützrades unmittelbar von dem Ineinandergreifen der Einlaufelemente und
- Figur 6: eine Teilansicht des in Figur 5 mit VI bezeichneten Ausschnitts zur detaillierteren Darstellung der Einlaufelemente

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Stützeinrichtung, des Außenrohrs, des Innenrohrs, des Stützrads, der Radlaschen, des Einlaufelements und dergleichen. Diese Begriffe sind nicht einschränkend zu verstehen, das heißt, durch verschiedene Arbeitsstellungen oder die spiegelsymmetrische Auslegung oder dergleichen können sich diese Bezüge ändern.

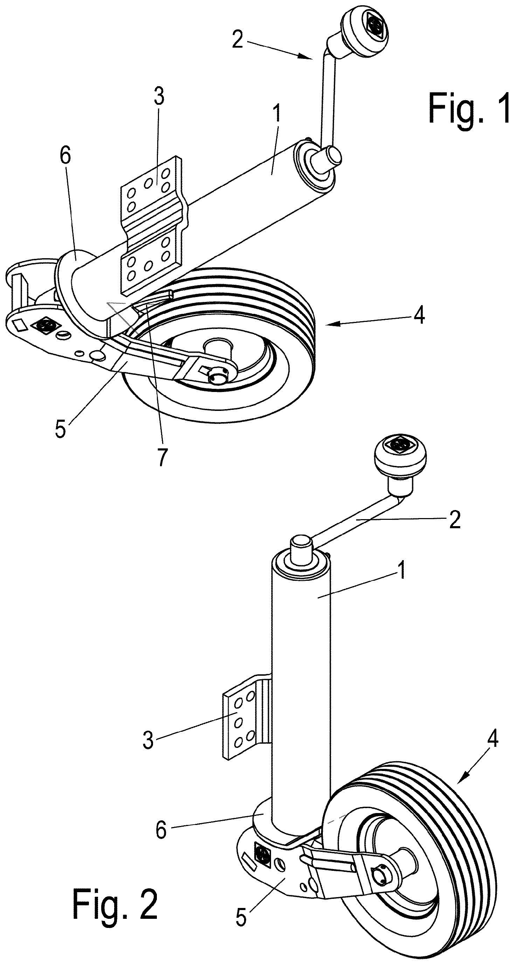

In den Figuren 1 bis 3 und 5 ist eine an einem Anhänger mit einem Befestigungsmittel 3 befestigbare Stützeinrichtung dargestellt. Die Stützeinrichtung weist dabei ein Außenrohr 1 auf sowie ein mittels einer Handkurbel 2 in dem Außenrohr 1 teleskopartig höhenverstellbar gehaltenes Innenrohr 8, an dessen unterem Ende, d.h. an dem von der Handkurbel 2 entfernten Ende, beidseitig gegenüber dem Außenrohr oder dem Innenrohr 8 auskragende Radlaschen 5 befestigt sind, zwischen denen ein Stützrad 3 drehbar gelagert ist.

Die Radlaschen 5 sind dabei bezüglich der Längsachse des Innenrohrs 8 oder des Außenrohrs 1 in einer bevorzugten Ausführungsvariante drehfest mit dem Innenrohr, beispielsweise über einen Bolzen miteinander verbunden.

Denkbar ist auch eine um die Längsachse des Innenrohrs 8 verdrehbare Befestigung der Radlaschen 5 an dem Innenrohr 8, wobei das Innenrohr in diesem Fall drehfest bezüglich der Längsachse des Außenrohrs 1 in dem Außenrohr 1 teleskopartig höhenverstellbar gehalten ist.

Im letzteren Fall ist neben der zylinderförmigen Gestaltung des Außenrohrs 1 und des Innenrohrs 8 auch eine polygonale Querschnittsgestaltung des Außenrohrs 1 und des Innenrohrs 8, insbesondere in Gestalt eines Vierkantrohrs denkbar.

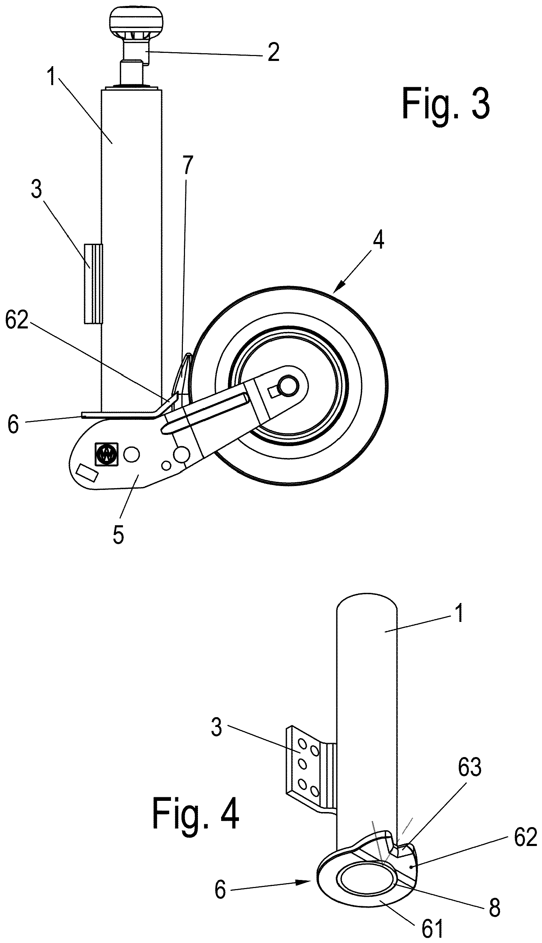

Wie in den Figuren 3 bis 6 besonders gut zu erkennen ist, ist gemäß einer bevorzugten Ausführungsvariante der Stützeinrichtung am Außenrohr 1 ein als Einlaufring ausgebildetes erstes Einlaufelement 6 befestigt. Dieses als Einlaufring ausgebildete erste Einlaufelement 6 besteht dabei bevorzugt aus einem sich radial von der Mantelfläche des Außenrohrs 1 nach außen erstreckenden Teilringstück und weist an seinem Außenumfang eine sich zum Innenumfang hin verjüngende Nut 63 auf.

Denkbar ist auch eine Ausführungsform des ersten Einlaufelements 6 als das Außenrohr nur teilweise umfassenden Einlaufteilring.

Der Ringbereich, in dem die Nut 63 vorgesehen ist, ist dabei vorzugsweise nach oben, d.h. zur Handkurbel 2 hin, abgewinkelt ausgebildet, um ein Einführen eines bevorzugt als Einlaufnase ausgebildeten zweiten Einlaufelements 7 zu erleichtern.

Der die Nut 63 aufweisende Teilbereich 62 des ersten Einlaufelements 6 ist dabei zur Handkurbel 2 hin bevorzugt in einem Winkelbereich von 10° bis 80°, besonders bevorzugt von 30° bis 60° zur Horizontalen abgewinkelt ausgebildet, während der nicht abgewinkelte Teilbereich des ersten Einlaufelements 6 vorzugsweise horizontal den Außenmantel des Außenrohrs 1 umschließt.

Das zweite Einlaufelement 7 ist dabei bevorzugt an einer der Radlaschen 5 oder einem die beiden Radlaschen 5 zwischen dem Stützrad 4 und dem Innenrohr 8 vorgesehenen (nicht gezeigten) Steg befestigt und erstreckt sich von dort parallel zum Außenrohr 1 nach oben zur Handkurbel 2 hin.

Um einen frühzeitigen Eingriff dieses als Einlaufnase ausgebildeten zweiten Einlaufelements 7 mit dem ersten Einlaufelement 6 zu erreichen, ist das erste Einlaufelement 6 bevorzugt am unteren Ende des Außenrohres 1, d.h. von einem an der Handkurbel 2 entferntem Ende des Außenrohes 1 befestigt.

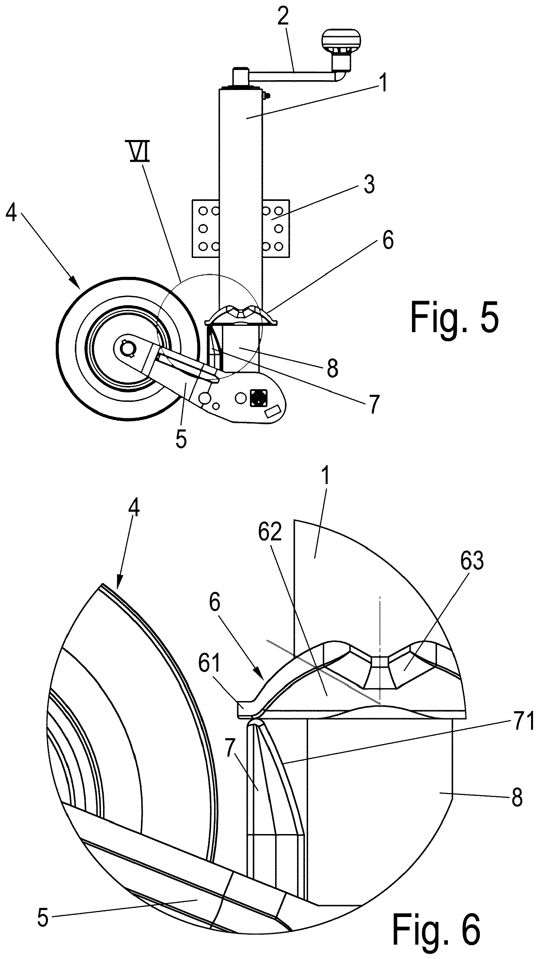

Vor dem Einfahren des Stützrades 4 in seine Nichtgebrauchsstellung, wie sie beispielweise in den Figuren 1 bis 3 gezeigt ist, bei der das Stützrad 4, wie es beispielsweise in Figur 1 gezeigt ist, in einer um 180° zum Befestigungselement 3 verschwenkten Stellung arretiert ist, kann das Stützrad 4 sich, wie beispielhaft in Figur 5 gezeigt, in einer anderen Winkelposition zum Befestigungselement 3 als der oben genannten befinden.

Während des Anhebens des Stützrades 4 mithilfe der Handkurbel 2, mit der das Innenrohr 8 in das Außenrohr 1 eingefahren wird, berührt die Spitze des als Einlaufnase ausgebildeten zweiten Einlaufelements 7 ab einer vorbestimmten Position des Innenrohrs 8 gegenüber dem Außenrohr 1 die der Handkurbel 2 abgewandte Unterseite des ersten Einlaufelements 6.

Je nach Winkelposition des Stützrades 4 berührt die Spitze des zweiten Einlaufelements 7 dabei den nach oben abgewinkelten Teilbereich 62 des ersten Einlaufelements 6 und wird bei weiterem Einfahren des Innenrohrs 8 in das Außenrohr 1 durch Führen des zweiten Einlaufelements 7 in die Nut 63 des ersten Einlaufelements 6 in seine vorbestimmte Winkelposition eingeschwenkt, in der das Innenrohr 8 vollständig in das Außenrohr 1 eingefahren werden kann.

Zur erleichterten Führung des zweiten Einlaufelements 7 in die Nut 63 des ersten Einlaufelements 6 ist das als Einlaufnase ausgebildete zweite Einlaufelement 7 auf seiner dem ersten Einlaufelement 6 zugewandten Seite nach oben hin, d.h. zur Handkurbel 2 hin, verjüngt ausgebildet.

Außerdem sind die die Nut 63 bildenden Ränder des Teilbereichs 62 des ersten Einlaufelements 6 vorzugsweise zumindest zur der Handkurbel 2 abgewandten Unterseite des Einlaufelements 6 hin abgefast ausgebildet, um ein leichtgängiges Einführen des zweiten Einlaufelements 7 in die Nut des ersten Einlaufelements 6 zu gewährleisten.

### Bezugszeichenliste

- 1: Außenrohr
- 2: Handkurbel
- 3: Befestigungsplatte
- 4: Stützrad
- 5: Radlasche
- 6: erstes Einlaufelement
- 61: Ring
- 62: Teilbereich
- 63: Nut
- 7: zweites Einlaufelement
- 71: Kante

## Patentansprüche

1. An einer Anhängerdeichsel befestigbare Stützeinrichtung, aufweisend ein an der Anhängerdeichsel befestigbares Außenrohr (1), ein mittels einer Handkurbel (2) in dem Außenrohr (1) teleskopartig höhenverstellbar gehaltenes Innenrohr (8), wobei an einem von der Handkurbel entfernten Ende des Innenrohres (8) gegenüber dem Außenrohr (1) auskragende Radlaschen (5) befestigt sind, zwischen denen ein Stützrad (4) gelagert ist, wobei an der Stützeinrichtung ein erstes Einlaufelement (6) vorgesehen ist, mit dem ein zweites Einlaufelement (7) derart in Wirkverbindung bringbar ist, dass das Stützrad (4) beim Einfahren des Innenrohres (8) in das Außenrohr (1) vor Erreichen der eingefahrenen Endposition des Innenrohres (8) in eine vorbestimmten Winkelposition eingeschwenkt ist, **dadurch gekennzeichnet, dass** das erste Einlaufelement (6) als Einlaufring oder Einlaufteilring mit einer in dessen Außenumfang eingelassenen, sich zum Innenumfang hin verjüngenden Nut (63) ausgebildet ist.

2. Stützeinrichtung nach Anspruch 1, **dadurch gekennzeichnet, dass** das zweite Einlaufelement (7) als Einlaufnase ausgebildet ist.

3. Stützeinrichtung nach einem der vorhergehenden Ansprüche, **dadurch gekennzeichnet, dass** das erste Einlaufelement (6) an der Mantelfläche des Außenrohres (1) und das zweite Einlaufelement (7) an einem der höhenverstellbaren Bauteile der Stützeinrichtung befestigt ist.

4. Stützeinrichtung nach einem der vorhergehenden Ansprüche, **dadurch gekennzeichnet, dass** das erste Einlaufelement (6) an einem von der Handkurbel (2) entfernten Ende des Außenrohres (1) befestigt ist.

5. Stützeinrichtung nach einem der vorhergehenden Ansprüche, **dadurch gekennzeichnet, dass** ein die Nut (63) aufweisender Teilbereich (62) des ersten Einlaufelements (6) zur Handkurbel (2) hin abgewinkelt ausgebildet ist.

6. Stützeinrichtung nach Anspruch 5, **dadurch gekennzeichnet, dass** der die Nut (63) aufweisende Teilbereich (62) des ersten Einlaufelements (6) zur Handkurbel (2) hin in einem Winkelbereich von 10° bis 80°, insbesondere von 30° bis 60° abgewinkelt ausgebildet ist.

7. Stützeinrichtung nach einem der vorhergehenden Ansprüche, **dadurch gekennzeichnet, dass** die die Nut (63) bildenden Ränder des Teilbereichs (62) des ersten Einlaufelements (6) zumindest zur der Handkurbel (2) abgewandten Unterseite hin abgefast ausgebildet sind.

8. Stützeinrichtung nach einem der vorhergehenden Ansprüche, **dadurch gekennzeichnet, dass** das als Nase ausgebildete zweite Einlaufelement (7) sich parallel zum Außenrohr (1) erstreckt und auf seiner dem ersten Einlaufelements (6) zugewandte Seite zur Handkurbel (2) hin verjüngt ausgebildet ist.

## Claims

1. Support device which can be fastened to a trailer drawbar, having an outer tube (1) which can be fastened to the trailer drawbar, an inner tube (8) which is held in the outer tube (1) in a telescopically height-adjustable manner by means of a crank handle (2), wherein wheel lugs (5), which project outwards relative to the outer tube (1) and between which a support wheel (4) is mounted, are fastened to an end of the inner tube (8) remote from the crank handle, wherein a first inlet element (6) is provided on the support device, with which a second inlet element (7) can be brought into operative connection in such a way that the support wheel (4) is pivoted into a predetermined angular position when the inner tube (8) is retracted into the outer tube (1) before reaching the retracted end position of the inner tube (8), **characterized in that** the first inlet element (6) is designed as an inlet ring or inlet partial ring with a groove (63) which is recessed in its outer circumference and tapers towards the inner circumference.

2. Support device according to claim 1, **characterized in that** the second inlet element (7) is designed as an inlet nose.

3. Support device according to one of the preceding claims, **characterized in that** the first inlet element (6) is fastened to the circumferential surface of the outer tube (1) and the second inlet element (7) is fastened to one of the height-adjustable components of the support device.

4. Support device according to one of the preceding claims, **characterized in that** the first inlet element (6) is fixed to an end of the outer tube (1) remote from the crank handle (2).

5. Support device according to one of the preceding claims, **characterized in that** a partial region (62) of the first inlet element (6) having the groove (63) is formed angled towards the crank handle (2).

6. Support device according to claim 5, **characterized in that** the partial region (62) of the first inlet element (6) having the groove (63) is formed angled towards the crank handle (2) in an angle range of 10° to 80°, in particular of 30° to 60°.

7. Support device according to one of the preceding claims, **characterized in that** the edges of the partial region (62) of the first inlet element (6) forming the groove (63) are formed in a beveled manner at least towards the underside facing away from the crank handle (2).

8. Support device according to one of the preceding claims, **characterized in that** the second inlet element (7) formed as a nose extends parallel to the outer tube (1) and is formed in a tapered manner towards the crank handle (2) on its side facing the first inlet element (6).

## Revendications

1. Dispositif d'appui pouvant être fixé à un timon de remorque, présentant un tube extérieur (1) pouvant être fixé au timon de remorque, un tube intérieur (8) maintenu dans le tube extérieur (1) et réglable en hauteur de manière télescopique au moyen d'une manivelle (2), des pattes de fixation de roue (5) faisant saillie par rapport au tube extérieur (1) et entre lesquelles est montée une roue d'appui (4) étant fixées à une extrémité du tube intérieur (8) éloignée de la manivelle, un premier élément d'entrée (6) étant prévu sur le dispositif d'appui, avec lequel un deuxième élément d'entrée (7) peut être mis en liaison fonctionnelle de telle sorte que, lorsque le tube intérieur (8) est rentré dans le tube extérieur (1), la roue d'appui (4) pivote dans une position angulaire prédéterminée avant que la position rentrée finale du tube intérieur (8) soit atteinte, **caractérisé en ce que** le premier élément d'entrée (6) est réalisé sous la forme d'une bague d'entrée ou d'une bague partielle d'entrée présentant une rainure (63) qui est pratiquée dans sa circonférence extérieure et qui s'effile en direction de la circonférence intérieure.

2. Dispositif d'appui selon la revendication 1, **caractérisé en ce que** le deuxième élément d'entrée (7) est réalisé sous la forme d'un bec d'entrée.

3. Dispositif d'appui selon l'une des revendications précédentes, **caractérisé en ce que** le premier élément d'entrée (6) est fixé à la surface périphérique du tube extérieur (1) et le deuxième élément d'entrée (7) est fixé à l'un des composants réglables en hauteur du dispositif d'appui.

4. Dispositif d'appui selon l'une des revendications précédentes, **caractérisé en ce que** le premier élément d'entrée (6) est fixé à une extrémité du tube extérieur (1) éloignée de la manivelle (2).

5. Dispositif d'appui selon l'une des revendications précédentes, **caractérisé en ce qu'**une zone partielle (62) du premier élément d'entrée (6) présentant la rainure (63) est coudée en direction de la manivelle (2).

6. Dispositif d'appui selon la revendication 5, **caractérisé en ce que** la zone partielle (62) du premier élément d'entrée (6) qui présente la rainure (63) est coudée en direction de la manivelle (2) dans une plage angulaire de 10° à 80°, en particulier de 30° à 60°.

7. Dispositif d'appui selon l'une des revendications précédentes, **caractérisé en ce que** les bords de la zone partielle (62) du premier élément d'entrée (6) qui forment la rainure (63) sont chanfreinés au moins en direction de la face inférieure opposée à la manivelle (2).

8. Dispositif d'appui selon l'une des revendications précédentes, **caractérisé en ce que** le deuxième élément d'entrée (7) réalisé sous la forme d'un bec s'étend parallèlement au tube extérieur (1) et s'effile en direction de la manivelle (2) sur son côté tourné vers le premier élément d'entrée (6).
